# EUROPEAN PATENT APPLICATION

(11) **EP 2 626 765 A1**
(43) Date of publication of application: **14.08.2013**
(21) Application number: 12154165.0
(22) Date of filing: 07.02.2012
(51) Int. Cl.: G06F 1/16

(54) **Work place system comprising a mobile device**

(71) Applicant: KIH-utveckling AB, 554 39 Jönköping (SE)
(72) Inventor: Hjelm, Johan, 564 36 Bankeryd (SE)
(74) Representative: Willquist, Sofia Ellinor

(57) **Abstract**

The present invention relates to a system for a work place comprising a work place piece of furniture, a computer screen, a computer data input device, and a mobile device. An interface for communicative connection to the mobile device is integrated into the piece of furniture, and the mobile device is adapted to function, when connected to the interface, as a computer in communicative connection with the computer screen and the computer data input device.

## Description

### Technical Field

The present disclosure relates to a system for a work place, and especially to a work place system comprising a mobile device.

### Background

An office work place is traditionally equipped with a computer, a computer screen and a data input device such as a keyboard and/or a mouse. The computer may be connected to a computer network, both externally onto internet, and internally to a corporation intranet.

Further, the computers for all employers in the corporation may be a large investment. This investment is though not long lasting since computers need to be replaced rather frequently.

One way of at least partially solving the above mentioned problems is to use computer clients in a cloud network, wherein the software used by the users are installed at a server and executed by the computer client via the internal network. The software programs do thereby not need to be installed on each computer client. This would facilitate the work with software updates and installations. However, there is still a need for large investments in computer equipment.

In an office landscape there may be a plurality of work places not dedicated to any specific employee. Any employee may use a vacant work place.

Consequently, there is a need for a work place that is adapted for this way of working in an office.

### Summary

It is an object of the present invention to provide an improved solution that alleviates the mentioned drawbacks with present devices. The present invention is based on realization that most users in an office environment are equipped with a mobile device used for various purposes.

According to an aspect of the invention this is achieved by a system for a work place comprising a work place piece of furniture, a computer screen, a computer data input device, and a mobile device. An interface for communicative connection to the mobile device is integrated into the piece of furniture, and the mobile device is adapted to function, when connected to the interface, as a computer in communicative connection with the computer screen and the computer data input device.

In an office or work place situation, a mobile device, such as a mobile phone, smart phone or a tablet computer, is an important tool for a user of the office or work place. The mobile device may be used for a large number of purposes in the office. In the present invention, a mobile device may be adapted to be connected to the piece of furniture by means of an interface. The interface may be integrated in the piece of furniture. For instance, the piece of furniture may be a table and the interface may be integrated in the table top.

Modern mobile devices, such as smart phones, are very powerful and may be used in the same way as a traditional computer. However, a mobile device may not be suitable for computer work a longer time. It may be preferable to have a computer screen and a data input device such as a keyboard and/or a mouse at one's disposal. By providing a work place according to the present invention, it may be facilitated to connect the mobile device to such devices.

Since most users in an office are equipped with a mobile device, the mobile device may be used as a computer, reducing the number of devices needed for the user. The mobile device may further comprise a network connection through a wireless connection, such as via WLAN or a mobile telephone network. The mobile device computer may thereby function with the network connection provided in the mobile device.

By using the mobile device as a computer, the efficiency in an office may be increased. It is common that an office comprises many work places, such as in an office landscape, and wherein different users use different work places at different times. Since the user commonly always bring the mobile device, it may be easy to change work place by only bringing the mobile device to a new work place. The mobile device may be easy to connect to the interface, and no logging in operation may be needed.

Due to the integration of the interface in the furniture, it may be easy to connect a mobile device to the piece of furniture and to the other accessory computer devices. With an integrated interface, there is further no possibility that the interface is lost, which could be the case if a separate docking station or the like is used for connection to the computer screen or keyboard. Further, all connections between the interface and the computer accessories may be integrated into the piece of furniture. All cables between the interface and the computer accessories may for instance be integrated in the piece of furniture such that they are not visible to a user. A work place which is easy accessible without any disturbing cables may be provided.

In one embodiment, the piece of furniture may comprise a control unit in connection with the interface, the computer screen and the computer input device, wherein the control unit may be adapted to distribute a communicative connection between the mobile device and the computer screen and computer input device.

The interface may receive communication from the mobile device. The interface may distribute the communication further to the control unit which further distributes the communication to the computer screen and input device. The control unit may further be adapted to power the computer screen and the interface. By having the communication between the devices being transmitted via the control unit, the control unit may power the devices through a common connection.

In another embodiment, the piece of furniture may comprise a control unit adapted to receive information from the mobile device identifying the user of the mobile device, and the control unit may be adapted to control settings of the computer screen and/or the computer data input device based on the identity information of the user.

A computer screen or a computer data input device may be able to be set with a number of settings which affects the usage of the devices. The work place may be located in a facility comprising a plurality of similar work places, such as an office landscape. By receiving identity information from the mobile device, the control unit may set the devices in a predetermined way for the identified user. A user may thereby get the same settings regardless which work place in the office he or she may use. The control unit may further provide power to the computer screen and/or the computer input device. The control unit may be adapted to power these devices based on the identity information from the mobile device. Alternatively, the control unit may be adapted to power these devices based on a present connection of a mobile device to the interface, i.e. when a mobile device is connected to the interface, the control unit may supply power to the computer screen and/or the computer input device.

In one embodiment, said interface may be adapted for a wired connection with the mobile device.

The interface may comprise a cable attached to the piece of furniture and connected to the control unit. A mobile device may be connected to the cable to get in connection with the control unit. The control unit may get information of when a mobile device is connected to the cable. With a wired connection the mobile device may be communicatively connected to the interface by an established standard which allows many different devices to be compatible with said interface. For example the wired connection may be a USB-connection, mini-USB-connection, micro-USB-connection, 30-pin dock connector or other wired connections. Moreover, with a wired connector charging of the mobile device may be enabled. Further, the user may visually confirm that the mobile device is connected to the integrated interface.

In another embodiment, said interface may be adapted for wireless connection with the mobile device.

In a further embodiment, said interface is a specified area on a surface of the piece of furniture.

The interface may comprise means for wireless connection with a mobile device. Such interface may comprise a specified area on the any of the preceding claims furniture wherein the interface is adapted for wireless connection with the mobile device. The means for wireless communication may comprise means for WLAN connection, Bluetooth connection, Near Field Communication (NFC) connection or the like. No physical connection between the mobile device and the interface more than the presence of the mobile device in the area may thereby be needed. This may further facilitate the usage of a work place with a mobile device functioning as a computer together with devices in the work place. Since the mobile device only needs to be provided into a specified area on the furniture, it may be fast and easy for a user to connect the mobile user to the interface.

In a further embodiment, the wireless connection may be a near field communication connection.

With a near field communication connection the mobile device may be communicatively connected to the interface through that mobile device is brought into the close range of the interface. Moreover, the mobile device may be communicatively disconnected from the adjustable piece of furniture's interface through that the mobile device is brought out of range of the near field communication. Thereby a user may save time and effort on how to connect and disconnect the mobile device to the interface.

Moreover, a near field communication connection may be a relative secure connection due to the small range in which it is operable, typically a few centimeters. Moreover, buy using a near field communication connection, there may be no risk of accidently connecting the mobile device to a proximate work station in the scenario where several workplaces are situated next to each other to form a flexible working area.

In one embodiment, said piece of furniture may be a table, and wherein said interface may be integrated into a table top of the table.

The interface may comprise a cable attached to the furniture, or another physical connection means, such as a dock, for connection to the mobile device. The interface integrated in the furniture may alternatively comprise a specified area, such as a specified area on the table top of the table, within which area the interface may be adapted for wireless connection to the mobile device.

In a further embodiment, the control unit may further comprise a computer network connection, and the mobile device, when connected to the interface, may be adapted to use said computer network connection.

The control unit in the piece of furniture may be provided with a network connection via a network cable. Such network connection may provide certain access to networks not accessible by the mobile device in a wireless network connection. When the mobile device is connected to the interface, the network connection in the control unit may be activated, and the computer unit formed by the mobile device, the computer screen and the computer input device may use the network connection for external communication.

### Brief Description of the Drawings

The invention will in the following be described in more detail with reference to the enclosed drawings, wherein:
Fig. 1 shows a perspective view of a work place system according to an embodiment of the invention.
Fig. 2 shows a perspective view of a work place system according to an embodiment of the invention.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

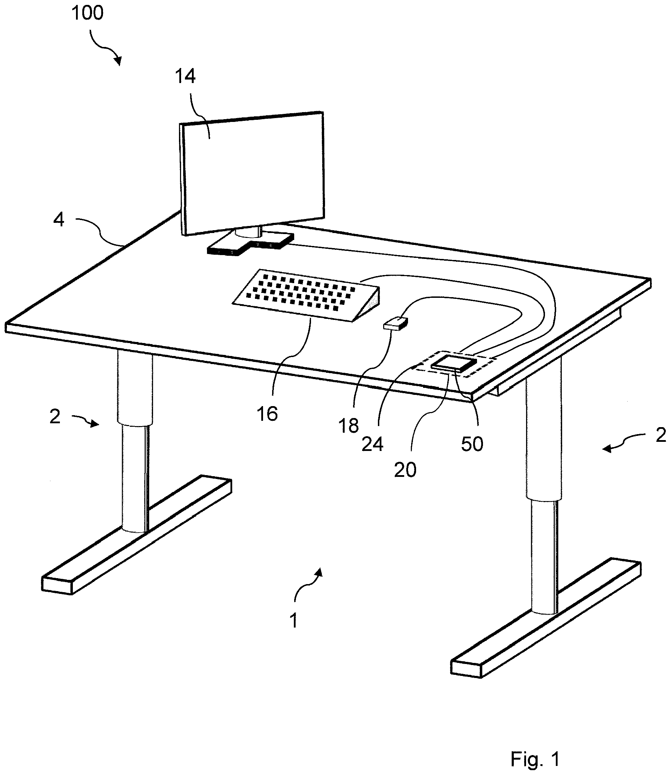

Fig. 1 illustrates a work place system 100 according to an embodiment. The work place system 100 comprises a piece of furniture illustrated as a table 1. The table 1 comprises two legs 2 and a table top 4. The work place system 100 further comprises an interface 20 for communicative connection with a mobile device 50. The interface 20 is connected to computer accessories such as a screen 14 and computer data input devices, such as a keyboard 16 and a mouse 18. The interface 20 communicates with the connected mobile device 50 and transfer information between the mobile device 50 and the accessories 14, 16, 18.

The interface 20 is integrated in the table 1 to be connected to the mobile device 50. The interface 20 may be provided in a plurality of implementations. As illustrated in fig. 1, the interface may comprise wireless connection means 24 for wireless connection with the mobile device 50. The wireless connection means is adapted for connection to the mobile device 50 via WLAN, Bluetooth, Near Field Communication (NFC) or the like. The wireless connection means and the mobile device may be adapted for any close distance communication between the interface 20 and the mobile device 50. The interface 20 is an integrated part of the table top 4. The wireless connection means of the interface 20 is provided in a specified area 24 of the table top 4. A user can place the mobile device 50 in the specified area 24 to activate the work place system 100 wherein the mobile device 50 is connected to the accessories 14, 16, 18 and acts like a computer.

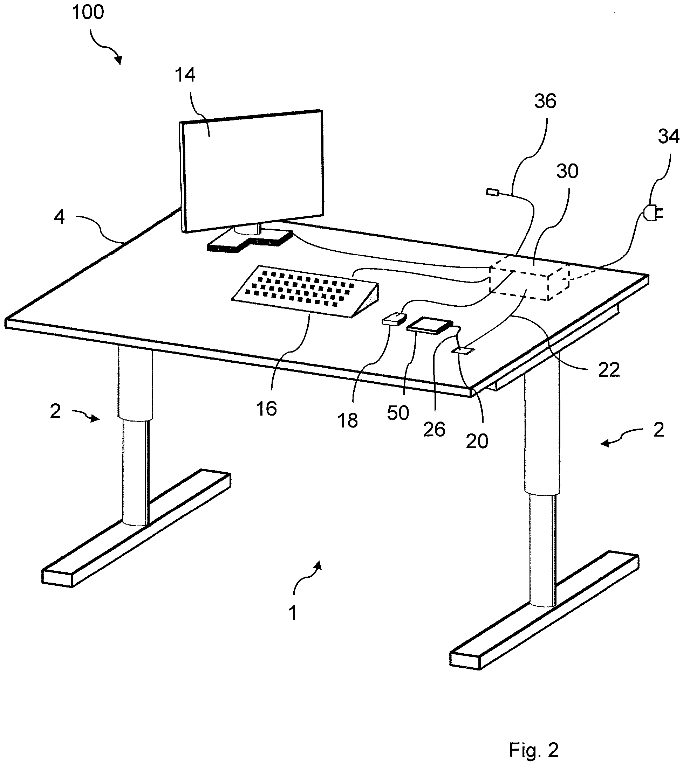

In one embodiment, as illustrated in fig. 2, the work place system 100 further comprises a control unit 30. The control unit 30 is connected to a mains power supply network via a power socket 34. The interface 20 is connected to the control unit 30 via a cable 22. The control unit 30 distributes the communication between the mobile device 50 and the accessory devices 14, 16, 18, and at the same time provides power to the same devices.

The interface 20 may, as illustrated in fig. 2, be provided with a cable 26 for attachment and communicative connection with the mobile device 50. The cable 26 may be a USB cable or any other communication cable adapted for attachment to a mobile device 50.

The interface 20 receives power supply from the control unit 30 and is adapted to charge a battery in the mobile device 50 when the mobile device 50 is connected to the interface 20. The charging of the battery in the mobile device 50 may be provided via the cable 26 when the interface 20 comprises a cable 26. Alternatively, the charging of the battery in the mobile device 50 may be provided through an induction field. The battery in the mobile device 50 may be adapted for being charged via induction, and the interface 20 may be provided as an area integrated in the table 1, as illustrated in fig. 1, adapted to provide an induction field. The mobile device 50 may thereby be charged wirelessly via the interface 20. Hence, the mobile device 50 may be in both wireless communicative connection with the interface 20, and in inductive charge connection with the interface 20. A user may thereby access the work place and use it with the mobile device 50 as a computer by only providing the mobile device 50 in the specified area 24.

Referring back to fig. 2, the table 1 may be a height adjustable table 1. The height adjustment of the table 1 is controlled by the control unit 30. The control unit 30 is adapted to control the operation of an electric motor (not shown) in the table 1 which motor operates the height adjustment. Due to the connection between the mobile device 50 and the accessory devices 14, 16, 18, forming a computer unit, via the control unit 30, the operation of the control unit 30 may be controlled by the computer unit. The height adjustment of the table 1 may thereby be controlled via the mobile device 50 and/or the screen 14 and the input devices 16, 18.

The computer unit 30 may in one embodiment comprise a network connection 36 to an external computer network. The mobile device 50 is then adapted to use the network connection 36 when connected to the interface 20. The network connection 36 provides certain access to computer networks and servers which the mobile device 50 may only access when connected to the interface.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A system (100) for a work place, wherein the system comprises
a work place piece of furniture (1),
a computer screen (14),
a computer data input device (16, 18), and
a mobile device (50),
**characterized in that**
an interface (20) for communicative connection to the mobile device is integrated into the piece of furniture, and wherein the mobile device is adapted to function, when connected to the interface, as a computer in communicative connection with the computer screen and the computer data input device.

2. A system according to claim 1, wherein the piece of furniture (1) comprises a control unit (30) in connection with the interface (20), the computer screen (14) and the computer input device (16), wherein the control unit is adapted to distribute a communicative connection between the mobile device (50) and the computer screen and computer input device.

3. A system according to claim 1 or 2, wherein the piece of furniture (1) comprises a control unit (30) adapted to receive information from the mobile device (50) identifying the user of the mobile device, and wherein the control unit is adapted to control settings of the computer screen (14) and/or the computer data input device (16, 18) based on the identity information of the user.

4. A system according to any of the preceding claims, wherein said interface (20) is adapted for a wired connection with the mobile device (50).

5. A system according to any of the preceding claims, wherein said interface (20) is adapted for wireless connection with the mobile device (50).

6. A system according to claim 5, wherein said interface (20) is a specified on a surface (24) of the piece of furniture (1).

7. A system according to claim 5 or 6, wherein said wireless connection is a near field communication connection.

8. A system according to any of the preceding claims, wherein said piece of furniture (1) is a table, and wherein said interface (20) is integrated into a table top (4) of the table.

9. A system according to claim 2, wherein the control unit (30) further comprises a computer network connection (36), and wherein the mobile device (50), when connected to the interface (20), is adapted to use said computer network connection.
